# EUROPEAN PATENT APPLICATION

(11) **EP 1 914 093 A1**
(43) Date of publication of application: **23.04.2008**
(21) Application number: 06021808.8
(22) Date of filing: 18.10.2006
(51) Int. Cl.: B60C 23/04

(54) **Wireless tire pressure monitor**

(71) Applicant: JOSN ELECTRONIC CO., LTD., Hsin Tien City T'ai pei 231 (TW)
(72) Inventor: Liao, Ben, Hsin Tien City Taipei County 231 (TW)
(74) Representative: Casalonga, Axel

(57) **Abstract**

A hidden wireless tire pressure monitor, comprising a tire pressure monitor (30) inside a tire (20), and an air faucet (50) extending out of the tire (20). A conductive element (40) is provided between the tire pressure monitor (30) and the air faucet (50). The inside of conductive element (40) electrically contacts the signal transmitting antenna (322) on the monitor PCB (32) in the tire pressure monitor (30), while the outside of the element connects and communicates with the root of air faucet (50). The signal transmitting antenna (322) of the tire pressure monitoring system inside tire (20) thereby extends out of the tire (20) through an air faucet (50) to receive a more accurate monitoring signal. Further, the monitor and the air faucet (50) are at the status of pivot joint for adjustment of the installment angle based on the specification of a wheel rim (21), thereby ensuring the working stability and the tire security when the tire is removed.

## Description

The invention relates to a hidden wireless tire pressure monitor and particularly to a transmitting antenna of a tire pressure monitoring system (TPMS) provided inside a tire, in which the antenna extends out of the tire through an air faucet to receive a more accurate transmitted signal. Meanwhile, the monitor and the air faucet are pivotally coupled for adjusting the installation angle based on the specification of a wheel rim, thereby achieving the operational stability and the tire security when removed.

Conventionally, when a vehicle runs for a period of time or is exposed to sunlight and parked at night, leakage of the tire pressure easily occurs so that the tire pressure is below normal 28psi, and thus a car driver is in potential danger, especially driving at a high speed, caused by such as insufficient tire pressure, which is so terrible we dare not think about it.

Thus, many manufacturers have developed the monitoring device for the tire running. Such a patent is disclosed in public patent Nos. 536489, 400811, 149143, 177543, 560445, 574977, 090946, 100539, and 396974. In the conventional patents, there are approximately electronic monitor and mechanic monitor, in which the mechanic monitor is mostly installed near the wheel rim outside the tire, which is a defect and not an objective of the invention, thereby unnecessary details being not given here.

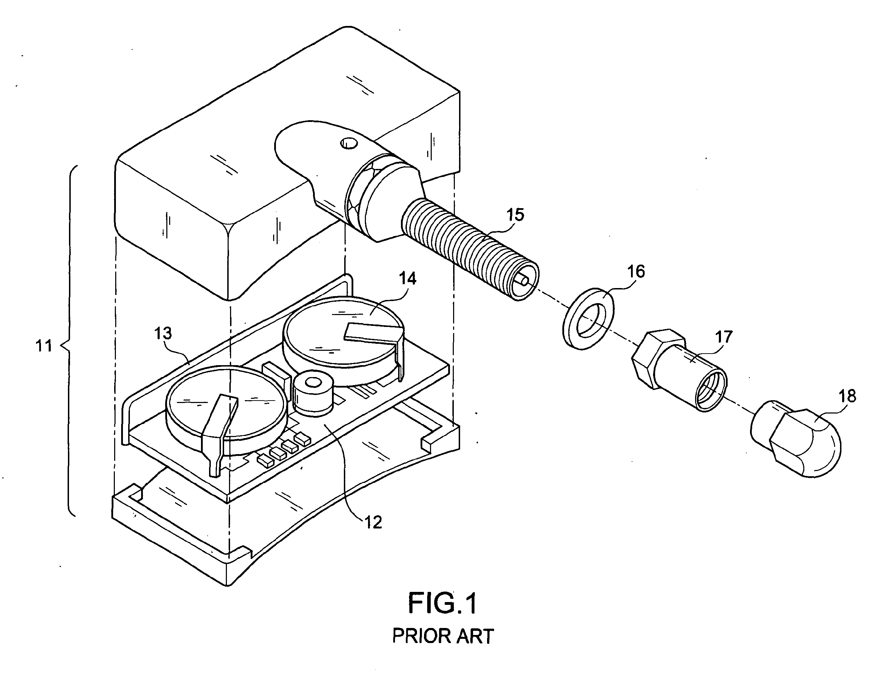

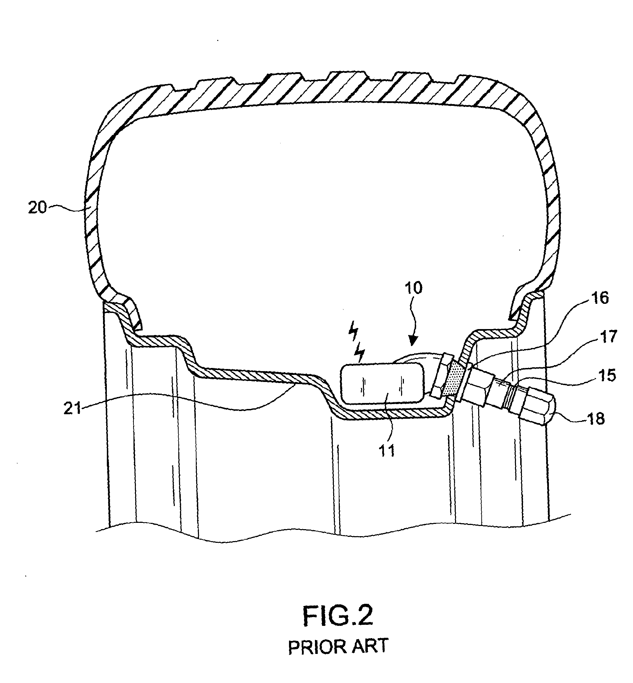

The electronic tire pressure is categorized into a visible monitor and a hidden monitor, but the visible monitor is easily stolen because being locked to the outside of air faucet, and is not an objective that is described in detail. Thus, the electronic tire pressure monitor is mainly installed as the hidden tire pressure monitor on the wheel rim inside the tire, and is disclosed in public patent Nos. 404354, 578706, and 578707. As an advantage, the tire pressure monitor is hidden inside the tire to directly detect the tire pressure, as shown in FIGS. 1 and 2, comprising a housing 11 and a monitor PCB 12 provided in the housing 11. The PCB 12 is provided with a signal transmitting antenna 13 and two batteries 14 as power supply to the PCB 12. Further, a front end of the housing 11 is connected to an air faucet 15. After the components are assembled into the tire pressure monitor 10, as shown in FIG. 2, the monitor 10 is fixed onto a wheel rim 21 inside a tire 20, an air faucet 15 is made to pierce through the wheel rim 21, a cushion 16 and a screw nut 17 are used, and finally a shield 18 is locked for completion of the assembly.

When detecting abnormal tire pressure, the conventional tire pressure monitor 10 transmits a signal through the antenna 13 and then a receiver not shown provided in the vehicle receives the signal of abnormal pressure. However, the transmitting antenna 13 is arranged inside the tire 20 structured with a plurality of layers and with a steel wire annulus. Thus, the wireless signal, when being transmitted, is covered by the annulus inside the tire, due to an electromagnetic wave, or the transmission of wireless signal is interfered by the wheel rim 21, thereby accuracy and reliability being poor, which is one of the defects.

Besides, the signal transmission easily gets difficulty, so the electric power of more batteries 14 is consumed to increase the strength of wireless signal and thus decrease the service life of the batteries 14, thereby the tire being often taken apart for replacement of the batteries.

Next, as shown in FIG. 2, the specifications of wheel rims 21 of various brands are not same, so an angle where the housing 11 of the tire pressure monitor 10 is fixed to the air faucet 15 seems to not satisfy the requirements of different wheel rims, and thus the housing 11 inside the tire 20 cannot keep close to the wheel rim 21 for clamping. Next, when the tire 20 is taken apart of the wheel rim 21 designed with some specifications, a dismantling tool, when being inserted into the tire 20 at an operation angle, easily collide with the housing 11, thereby the tire pressure monitor 10 being damaged, which is the other defect.

Consequently, because of the technical defects of described above, the applicant keeps on carving unflaggingly through wholehearted experience and research to develop the present invention, which can effectively improve the defects described above.

It is the object of the invention to mainly provide a hidden wireless tire pressure monitor provided with a transmitting antenna arranged in a tire pressure monitoring system TPMS inside a tire, in which the antenna extends out of the tire through an air faucet to receive a more accurate transmitted signal, thereby the reliability of tire pressure detection being increased for gained security of usage.

It is further an object of the invention to provide the hidden wireless tire pressure monitor, in which the antenna extends out of the tire to increase the strength of wireless signal and further decrease the consumption of battery, thereby the service life of battery being elongated.
It is a next object of the invention to provide the hidden wireless tire pressure monitor, in which the monitor and the air faucet are at the status of pivot joint and the installment angle may be adjusted depending on the specification of wheel rim for the stability of usage and the prevention of the monitor from being damaged by the tire when being dismantled.

In order to achieve the above-mentioned objects, a hidden wireless tire pressure monitor in accordance with the invention includes:
a) a tire pressure monitor having a housing, the housing being provided on a wheel rim inside a tire, both of a tire pressure monitor PCB and a battery supplying power to the monitor PCB being provided in the housing; and
b) an air faucet provided at a front end of the tire pressure monitor, the outside of the air faucet being in the form of threads, a leakproof cushion being set around the root, the air faucet being clamped with a fixing unit after an external part of the air faucet passes through a piercing hole of the wheel rim;
wherein a signal transmitting antenna is laid on a surface of the monitor PCB, and at least a part of the transmitting antenna is laid on a front section of the surface of monitor PCB;
wherein a conductive element of which the inside is in the form of a flat panel set at a front side of the housing and electrically contacting the transmitting antenna on the monitor PCB, and of which the outside is a in the form of a pivot joint protruding from the front side of housing; and
wherein the root of air faucet is formed into a flange, and an air hole is provided between the air faucet and the flange inside which a connecting portion is provided to communicate with the pivot joint of the conductive element, so that the signal transmitting antenna of tire pressure monitor extends out of the tire through the air faucet by means of the conductive element.

The accomplishment of this and other objects of the invention will become apparent from the following descriptions and its accompanying figures of which:
Fig. 1 is a perspective exploded view of a conventional tire pressure monitor;
Fig. 2 is a reference view of a service condition of the conventional tire pressure monitor;
Fig. 3 is a perspective exploded view of the invention;
Fig. 4 is a perspective assembly drawing of the invention;
Fig. 5 is a sectional top view of ;
Fig. 6 is a sectional side view of the invention; and
Figs. 7 is a reference view of a service condition of the invention.

Now, the present invention will be described more specifically with reference to the following embodiments. It is to be noted that the following descriptions of preferred embodiments of the invention are presented herein for purpose of illustration and description only; it is not intended to be exhaustive or to be limited to the precise form disclosed.

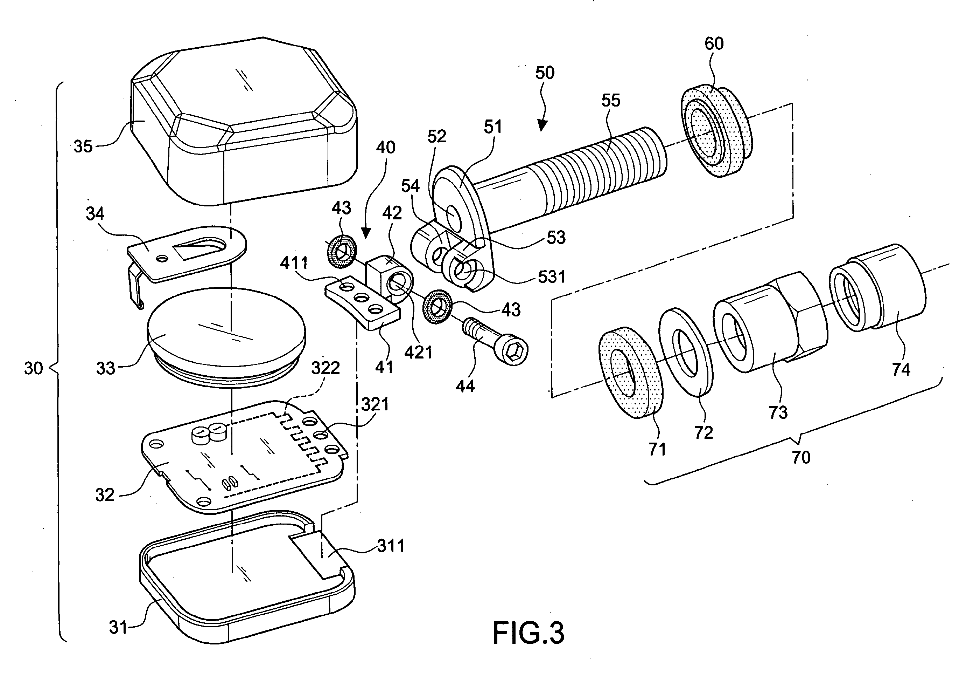

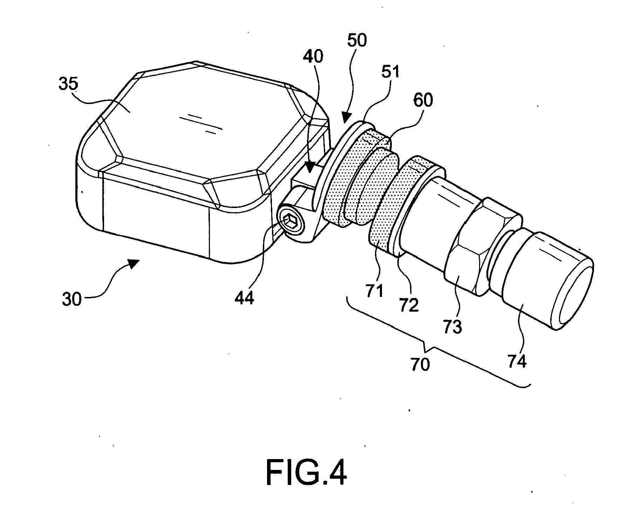

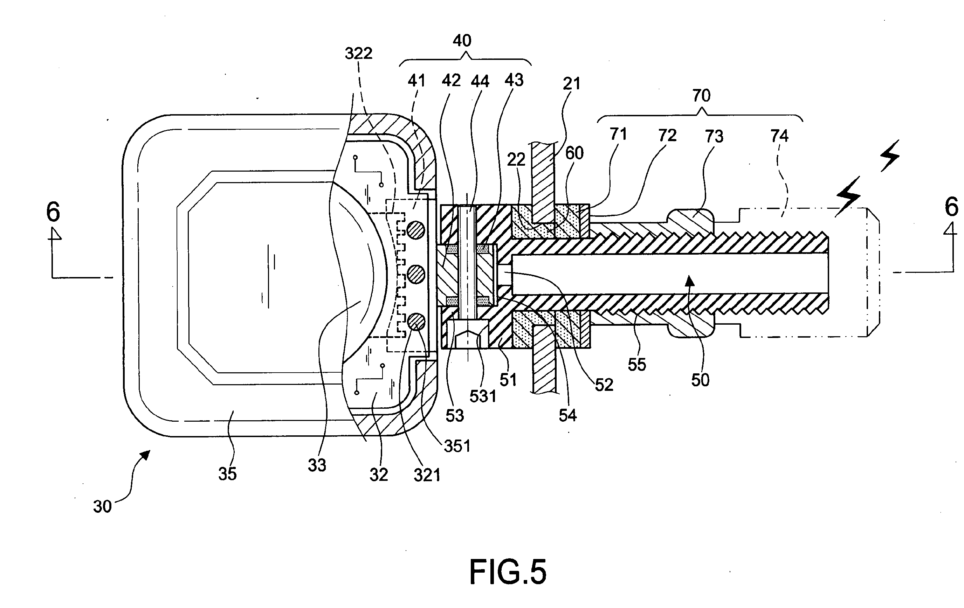

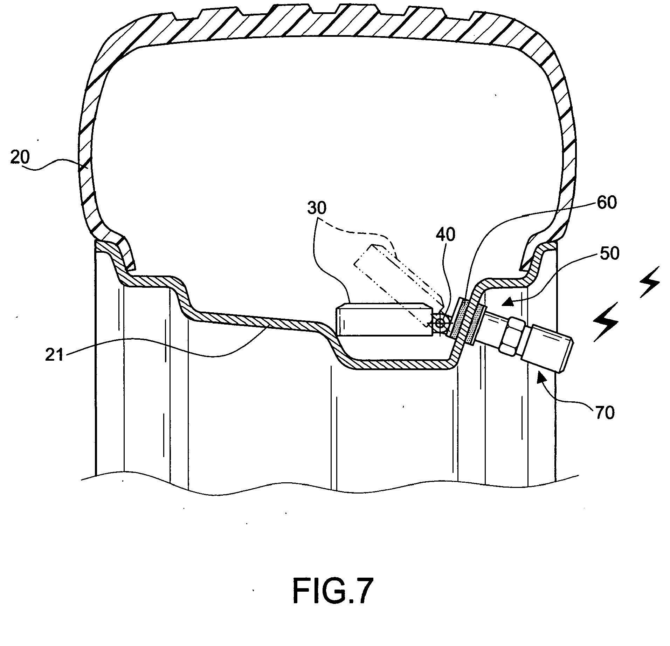

First, with reference to FIGS. 3 and 4, a preferred embodiment of the invention comprises:
a tire pressure monitor 30 of which the housing is provided on a wheel rim 21 inside a tire, as shown in FIG. 7 and formed preferably with, but not limited to, a pedestal 31 and a top cover 35, such as a body of injection molding that is acceptable; a tire pressure monitor PCB 32 being provided in the housing, namely an integrated circuit of Tire Pressure Monitoring System TPMS being provided on the monitor PCB 32; however, the TPMS being not an objective of the invention that is described in detail; besides, in the housing, a battery 33, supplying power to the monitor PCB 32, and an elastic flake 34 that may clamp the battery 33 being provided; and
an air faucet 50 provided at a front end of the tire pressure monitor 3 0, the outside of being in the form of threads 55 and a leakproof cushion 60 being set around the root; further, an external portion of the air faucet 50 passing through a hole 22 of the wheel rim 21 and being fixed with a fixing unit 70, as shown in FIG. 5; the fixing unit 70 comprises a rubber cushion 71, a metallic spacer 72, a screw nut 73, and a cover 74, which is a prior art not described herein in detail.

The invention is mainly characterized that a signal transmitting antenna 322 is laid on a surface of the monitor PCB 32 and may be laid on, but not limited to, a top surface or bottom surface of the monitor PCB 32 based on the requirements, and in the embodiment of the invention, it is laid on, but not limited to, the bottom surface. Further, at least a part of the transmitting antenna 322 is laid on a front section of the surface of monitor PCB 32 for the electrical connection to the air faucet 50.

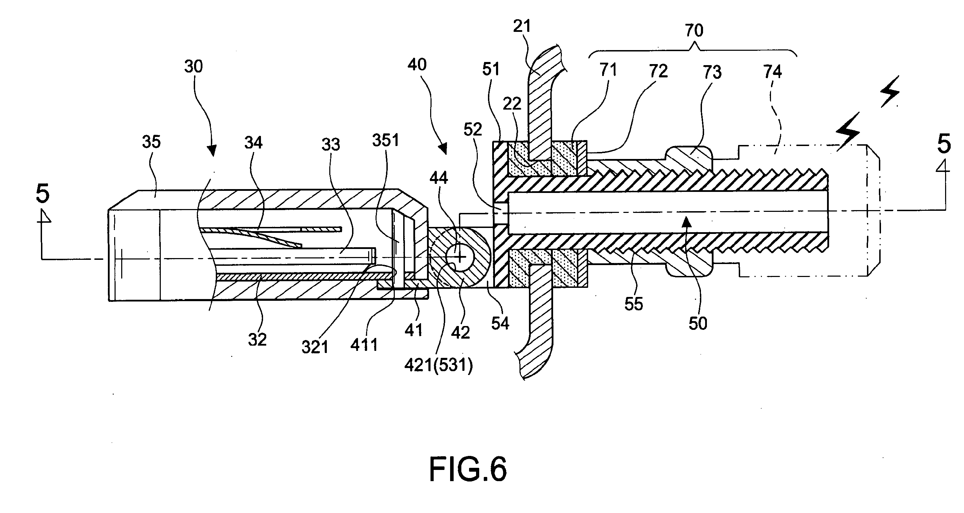

The electrical connection is implemented by a conductive element 40 of which the inside is in the form of flat panel 41 set at a front side of the housing of tire pressure monitor 30 and electrically contacting the transmitting antenna 322 on the monitor PCB 32, as shown in FIG. 5. With cross reference to FIGS. 3, 5, and 6, in the embodiment, a hollow area 311 is provided at a front end of the pedestal 31 for placement of the flat panel 41 of the conductive element 40, and the flat panel 41 is provided with at least a locating hole 411. A locating hole 321 is also provided at the front end of the monitor PCB 32. As shown in FIG. 6, locating pins 351 are lengthways inserted into the locating holes 321 and 411 of the top cover 35 to locate the flat panel 41 of the conductive element 40 in the monitor PCB 32 and to ensure an electrical contact with the transmitting antenna 322.

Further, an external side of the conductive element 40 is a pivot joint 42 protruding from the front side of housing and is provided with a sealing ring 43 at two sides of an axial hole 421. The root of air faucet 50 is formed into a flange 51, and an air hole 52 is provided passing through the air faucet 50 to the flange 51. A connecting portion 53 is provided inside the flange 51 to communicate with the pivot joint 42 of the conductive element 40. A groove 54 between two projecting ears may be provided for receiving the pivot joint 42, and a screw bolt 44 is used to pass through the axial holes 531 and 421, thereby the status of pivot connection existing.

Fig. 4 is a perspective view of the invention that is assembled but not installed in the wheel rim of tire; when it is installed in the wheel rim 21, as shown in FIGS. 5 through 7, it is known in FIG. 5 that the transmitting antenna 322 in the monitor PCB 32 contacts the flat panel 41 of the conductive element 40, thereby the electrical connection being formed. The pivot joint 42 and the flat panel 41 are combined into the unity, so the pivot joint 42 passing through the connecting portion 53 and the flange 51 makes the signal transmitting antenna 322 inside the tire pressure monitor 30 extend out of the tire 20 by means of the conductive element 40 through the air faucet 50, as shown in FIG. 7, in order to get a more accurate transmitting signal and increase the reliability of TPMS for gained usage security. Moreover, the wireless signal strength may be so increased that the power consumption of battery is reduced for prolonging the service life.

Besides, the characteristics of the invention are formed with what is described above so that the tire pressure monitor 30 inside the tire 20 and the air faucet 50 are at the status of pivot joint but not that of fixture, and the installment angle may be adjusted depending on the specification of wheel rim 21 for the stability of usage and the prevention of the monitor 30 from being damaged by the tire 20 when being dismantled. Further, as shown in FIG. 6 of the invention, adjusting the angle of installment or extending the antenna out of the air faucet 50, because the air hole 52 of the flange 51 is provided at the top of conductive element 40, does not impact the inflation or deflation of tire.

Thus, in the invention, the antenna of TPMS may extends out of the tire through the air faucet and may also be adjusted at a proper angle of installment corresponding to the requirements of various wheel rims for the effects of precision, security, and practical utility.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A hidden wireless tire pressure monitor, comprising:
a) a tire pressure monitor (30) having a housing, the housing being provided on a wheel rim (21) inside a tire (20), both of a tire pressure monitor PCB (32) and a battery (33) supplying power to the monitor PCB (32) being provided in the housing; and
b) an air faucet (50) provided at a front end of the tire pressure monitor (30), the outside of the air faucet being in the form of threads (55), a leakproof cushion (60) being set around the root, the air faucet (50) being clamped with a fixing unit after an external part of the air faucet (50) passes through a piercing hole (22) of the wheel rim (21);
wherein a signal transmitting antenna is laid on a surface of the monitor PCB (32), and at least a part of the transmitting antenna (322) is laid on a front section of the surface of monitor PCB (32);
wherein a conductive element (40) of which the inside is in the form of a flat panel (41) set at a front side of the housing and electrically contacting the transmitting antenna (322) on the monitor PCB (32), and of which the outside is a in the form of a pivot joint (42) protruding from the front side of housing; and
wherein the root of air faucet (50) is formed into a flange (51), and an air hole (52) is provided between the air faucet (50) and the flange (51) inside which a connecting portion (53) is provided to communicate with the pivot joint (42) of the conductive element (40), so that the signal transmitting antenna (322) of tire pressure monitor extends out of the tire through the air faucet (50) by means of the conductive element (40).

2. The hidden wireless tire pressure monitor as recited in claim 1 wherein the housing of the tire pressure monitor (30) includes a pedestal (31) and a top cover (35).

3. The hidden wireless tire pressure monitor as recited in claim 2 wherein a hollow area (311) is provided at a front end of the pedestal (31) for placement of the flat panel of the conductive element (40), and the flat panel (41) is provided with at least a locating hole (411), and wherein a locating hole is also provided at the front end of the monitor PCB (32), and wherein locating pins (351) are lengthways inserted into the locating holes (321) and (411) of the top cover (35) to locate the flat panel (41) of the conductive element (40) in the monitor PCB (32) and to ensure an electrical contact with the transmitting antenna (322).

4. The hidden wireless tire pressure monitor as recited in claim 1 wherein a sealing ring is provided at both sides of an axial hole (421) of the pivot joint (42) of the conductive element (40), respectively, and wherein a connecting portion of the air faucet (50) includes two parallel projecting ears each having an axial hole, and wherein a groove (54) between the projecting ears of the connecting portion (53) is provided for receiving the pivot joint (42), and wherein a screw bolt (44) passes through each of the axial holes (531) and (421), thereby establishing a pivotal connection for adjusting the installation angle of the tire pressure monitor (30) and the air faucet (50).

5. The hidden wireless tire pressure monitor as recited in claim 1 wherein the fixing unit (70) includes a rubber cushion (71), a metallic spacer (72), a screw nut (73), and a cover (74).
